# EUROPEAN PATENT SPECIFICATION

(11) **EP 0 711 643 B1**
(45) Date of publication and mention of the grant of the patent: **12.03.2003**
(21) Application number: 95202551.8
(22) Date of filing: 21.09.1995
(51) Int. Cl.: B29C 33/62, B29C 33/50

(54) **Tire cure bladders containing polytetrafluoroethylene powder and use thereof**
Reifenaufbautrommel mit Polytetrafluorethylenpulver und ihre Verwendung
Vessie de vulcanisation contenant du polytétrafluoréthylène en poudre et son utilisation

(30) Priority: 30.09.1994 US 315389
(43) Date of publication of application: 15.05.1996
(73) Proprietor: THE GOODYEAR TIRE & RUBBER COMPANY, Akron, Ohio 44316-0001 (US)
(72) Inventor: Patitsas, George Philemon, Kent, OH 44240 (US); Sandstrom, Paul Harry, Tallmadge, OH 44278 (US); Apticar, Samson Samuel, Uniontown, OH 44685 (US); Kansupada, Bharat Kanchanlal, Mogadore, OH 44260 (US)
(74) Representative: Leitz, Paul

(56) References cited:
- US-A- 5 238 991
- DATABASE WPI Section Ch, Week 8621 Derwent Publications Ltd., London, GB; Class A, AN 86-135008 (21) XP002015801 & JP-A-61 072 505 (BRIDGESTONE TIRE K.K.) , 14 April 1986
- PATENT ABSTRACTS OF JAPAN vol. 9, no. 209 (M-407) & JP-A-60 071210 (YOKOHAMA GOMU K.K.), 23 April 1985,

## Description

### Field of Invention

This invention relates to tire curing bladder having therein a fluorinated polymer in particulate form and butyl rubber polymers or copolymers including halogenated butyl rubbers and/or halogenated copolymers of p-methylstyrene and isobutylene. It also relates to a method of curing tires utilizing such a bladder.

### Background of the Invention

Conventionally pneumatic rubber vehicle tires are produced by molding and curing a green or uncured and unshaped tire in a molding press. The green tire is pressed outwardly against a mold surface by means of an inner fluid-expandable bladder. By this method the green tire is shaped against the outer mold surface which defines the tire tread pattern and configuration of the side walls. By application of heat and pressure the tire is molded and cured at elevated temperatures.

In general practice, the expansion of the bladder is accomplished by application of internal pressure to the inner bladder cavity which is provided by a fluid such as gas, hot water and/or steam which also participates in the transfer of heat for the curing or vulcanization of the tire. The tire is then conventionally allowed to cool somewhat in the mold, some times aided by adding cold or cooler water to the bladder. Then the mold is opened, the bladder is collapsed by removal of its internal fluid pressure and the tire is removed from the tire mold. Such use of tire curing bladders is well known to those having skill in the art.

It is recognized that there is substantial relative movement between the outer contacting surface of the bladder and the inner surface of the tire during the expansion phase of the bladder. Likewise, there is considerable relative movement between the outer contacting surface of the bladder and the cured inner surface of tire during the collapse and the stripping of the bladder from the tire after the tire has been molded and vulcanized.

The bladder surface can tend to stick to a tire's inner surface after the tire is cured and during the bladder collapsing part of the tire cure cycle. This adhesion may cause roughening of the bladder surface if it is not controlled. This reduces bladder durability and can produce defective tires. For this reason, it is conventional practice to precoat the inner surface of the green or uncured tires with a lubricant in order to provide lubricity between the outer bladder surface and inner tire surfaces during the entire molding operation. This lubricant has also been called a bladder lubricant, and is often a silicone polymer dispersed in a solvent or water.

It is to be appreciated that the release of the tire from its cure bladder in an industrial manufacturing setting is intimately associated with both the phenomenon of release (to prevent sticking) and the phenomenon of lubrication (to enhance slipping) between the bladder and the adjacent tire surfaces. The release aspect refers to the basic ability to avoid adhesion, or release and the aspect of lubrication relates to enhancing the ability of the surfaces to slip and enable a movement of the bladder with respect to the tire.

Butyl rubber is commonly used in tire curing bladders. Butyl rubber is a copolymer of predominantly isobutylene with small amounts of diene monomers usually isoprene to give sufficient unsaturation to allow the butyl rubber to be crosslinked. Copolymers of isobutylene and para-methylstyrene which are subsequently brominated are being manufactured by Exxon. These copolymers of isobutylene and para-methylstyrene are useful in applications where butyl rubber is used.

Fluorinated ethylene polymers have been added to thermoplastic and thermoset polymers in patents such as **US-A-3 002 938** where it was added at concentrations from 0.75 to 2.5 weight percent to provide ozone resistance; **US-A-3 600 309** where poly(tetrafluoroethylene) was added at concentrations from 0.05 to 0.45 parts per 100 parts rubber to solve extrusion related problems; **US-A-3 940 455** where oriented Teflon™ fibers were formed within an elastomer to enhance the apparent tensile strength; and **US-A-5 238 991** where poly(tetrafluoroethylene) and/or poly(fluoroethylene) compatibilizer was used in a tire side wall to enhance ozone resistance. The examples therein showed that ozone resistance is decreased in dynamic ozone tests when 10 parts poly(tetra-fluoroethylene) per 100 parts rubber was used without a compatibilizer. The use of a compatibilizer allowed the use of larger amounts of poly(tetrafluoroethylene) in the composition.

Accordingly, it is desired to provide curing bladders with increased lubricity, decreased adhesion of the bladder to cured tires, increased flex life, and improved heat stability.

### Summary of the Invention

The present invention concerns an expandable curing bladder characterized by comprising:
a) one or more isobutylene polymers or copolymers having at least 50 weight percent isobutylene units and optionally one or more other rubbery polymers,
b) 0.5 to 30 parts by weight of one or more particulate fluorinated ethylene polymers having a number average particle diameter of from 1 to 25µm dispersed throughout the bladder, and
c) one or more curatives for said one or more isobutylene polymers or copolymers and
wherein said parts by weight are based upon 100 parts by weight of said one or more isobutylene polymers or copolymers and said optional rubbery polymers in said bladder.

Fluorinated ethylene polymers in particulate form were found to enhance lubricity (reduces coefficient of friction), lower adhesion to tire innerliners of butyl rubber curing bladders, enhance their resistance to failure in dynamic flex tests such as PG flex test ASTM 813 and reduce bladder growth (lower hot tension set). Brominated copolymers of isobutylene and *p*-methyl-styrene were found to have enhanced heat stability in curing bladder applications and to have improved performance as curing bladders with incorporation of particulate fluorinated ethylene polymers.

### Detailed Description

The fluorinated ethylene polymers (PFE) of the present invention are polymers of one or more fluorinated ethylene monomers. These PFE's can be selected from the representative and illustrative group of polymers containing homopolymers and copolymers of fluorinated ethylene monomers selected from the group consisting of tetrafluoroethylene, vinyl fluoride, vinylidene fluoride, trifluoroethylene, and chloro trifluoroethylene. The preferred polymers are polytetrafluoroethylene (PTFE) and copolymers of tetrafluoroethylene and one or more of the above stated fluorinated ethylene monomers with PTFE being the most preferred. The fluorinated ethylene polymers desirably have greater than 50, 75, 85 or 95% repeat units having one or more fluorine atoms. The PFE polymers of particular utilities are particulate PFE's having particle sizes of between 1-25 µm, preferably 1-10 µm and most preferably less than 6 µm. Other particle sizes are useable. However, the small particle size PFE's are preferred because the smaller particles disperse better during the rubber mixing processes. The fluorinated ethylene polymers are present from 0.5 to 30 phr, more desirably from 2 to 20 phr, and preferably from 4 to 15 phr.

The PFE's of the present invention can be fibrillating or non-fibrillating and can be chosen from any of the commercial PFE polymers. One such particulate PFE is Polymist™ F-5A from Ausimont of Morristown New Jersey U.S.A. However, other similar particulate PFE's can be utilized with equal advantage including those available from Dupont such as Teflon®. When a polymer is recited as consisting essentially of tetrafluoroethylene repeat units herein it is meant that the polymer behaves as polymers from tetrafluoroethylene do in the composition even though trace amount of initiator and chain transfer molecule fragments and/or other monomers may be present.

PFE compatibilizers known to the art may be used in these compositions or they may be excluded. They may be fluorine containing organic surfactants such as fluorocarbon surfactants from 3M Company named Fluorad™ FC430. 3M characterizes their surfactant as a non-ionic surfactant of a fluorinated alkyl ester being 100 percent active and having a Brookfield viscosity at 25°C, spindle No. 3 at 6 rpm of 15,000 centipoise, a specific gravity of 1.15 at 25°C, and a refractive index of 1.445 at 25°C, and a flash point above 300°F.

Other suitable PFE compatibilizers include Solsperse™ 13940 which is distributed in the U.S. by ICI Americas Incorporated of Wilmington, Delaware. This material is described in material safety data sheets as a water soluble liquid consisting of polymeric fatty ester 40 percent and a paraffinic solvent 60 percent having a boiling point of 464 to 500°F (240-260°C) and a specific gravity of 0.840.

The preferred rubber for this application is a copolymer of at least one iso-olefin monomer and at least one para-alkylstyrene monomer which copolymer is desirably brominated. The iso-olefin may be one or more iso-olefins of 4 to 7 carbon atoms. The alkyl of the alkylstyrene may have 1 to 11 carbon atoms. Desirably at least 50, more desirably at least 75, 80, 85 or 95 weight percent of the rubbers of the bladder formulation are one or more copolymers having at least repeat units from iso-olefin and para-alkylstyrene. Desirably the at least one iso-olefin is 80, 90, or 95 weight percent or more isobutylene. Desirably, the para-alkylstyrene is 80, 90, or 95 weight percent or more para-methylstyrene. Desirably the methylstyrene content is from 1 to 20 weight percent para-methylstyrene, and more desirably from 2 to 15 weight percent para-methylstyrene. Desirably the isobutylene content is from 80 to 99 weight percent and more desirably from 85 to 98 weight percent.

In one aspect the copolymer of said at least one iso-olefin monomer and at least one para-alkylstyrene monomer is brominated, desirably after the monomers are polymerized. As recited in the European patent application below, bromination occurs preferentially on the para-methyl group. Desirably the bromine content of the copolymer is up to 5 weight percent and preferably from 0.2 to 1.5 or 2.5 weight percent in the polymer. Diene monomers having 4 to 8 carbon atoms are optionally present up to 5 or 8 weight percent, desirably from 0.5 to 3 weight percent. The preferred copolymer of isobutylene and para-methylstyrene is essentially free of isoprene and other conjugated dienes. A highly preferred brominated copolymer is Exxpro™ from Exxon Chemical with a Mooney Viscosity ML (1+8) 125°C of 50 plus or minus five, a para-methylstyrene content of about 5 weight percent, isobutylene content of 94 or 95 weight percent, and a total bromine content of 0.8 weight percent. **EP-A-0 344 021** describes how to make such polymers.

Optionally butyl rubbers may be used in combination with the particulate poly(fluorinated ethylene)s either in combination with the isobutylene-paramethylstyrene copolymer or in lieu thereof. Desirably at least 50 weight percent and more desirably at least 75, 80, 85 or 90 weight percent of all the rubbery polymers of the bladder composition are a butyl rubber polymer from isobutylene and one or more conjugated dienes, preferably isoprene. Desirably the isoprene is from 1 to 5 weight percent with the remainder being isobutylene (e.g. 95-99 weight percent). Such butyl rubber may be halogen substituted butyl rubbers such as chlorobutyl and bromobutyl where the halogen content is from 0.5 to 2, 3, or 4 weight percent.

Small amounts (e.g. up to 10 or 20 weight percent of all rubbery polymers) of diene based elastomers such as neoprene rubber may also be used. Neoprene rubber is also known as poly(chloroprene). It is a common co-curative in resin cure systems as described below. In rubber formulations the Neoprene is counted towards the 100 parts by weight rubber even though it has a separate function as a halogen containing elastomer. Other halogen containing rubbery polymers are less preferred halogen sources but may be included in amounts up to 10 or 20 weight percent of the rubbery polymers when a halogen source is desirable to activate a resin cure system.

Desirably the 100 parts rubber of the bladders are at least 50, 75, 80, 85 or 90 weight percent polymers or copolymers of isobutylene. The butyl rubber bladder can be cured with sulfur cure and/or resin cure systems. Sulfur cure systems are less preferred with isobutylene polymers having residual unsaturation as reversion and/or increasing modulus during use as a curing bladder can result. Resins for curing systems may be used in amounts from 1 to 10 phr and include conventional phenol formaldehyde resins. A resorcinol/formaldehyde resin cure system is often used to avoid reversion. Such cure systems for bladder compositions are well known to those having skill in the art; for an example, see **US-A-3 031 423.** A resin cure system using a reactive phenolformaldehyde and neoprene as a halogen source is shown in **TABLE I.** In **TABLE II** a resin cure system is used where the brominated copolymer of isobutylene and para-methylstyrene is the halogen source.

The cured rubber compositions for use in a bladder may also contain conventional additives including fillers, peptizing agents, stearic acid, accelerators, sulfur vulcanizing agents, resin for curing, antiozonants, antioxidants, processing oils, activators, initiators, plasticizers, waxes, prevulcanization inhibitors, extender oils and the like.

. If a sulfur cure system is to be used the amount of sulfur is conventionally from 0.1 to 2 parts per 100 parts rubber. The abbreviation phr will be used in this text to designate parts by weight per 100 parts by weight of rubber in a bladder. Representative sulfur vulcanizing agents include elemental sulfur (free sulfur) or sulfur donating vulcanizing agents, for example, an amine disulfide, polymeric polysulfide or sulfur olefin adducts. Rubber or rubbery polymers are crosslinkable predominantly non-crystalline polymers with Tg values below 0°C and preferably below -20°C. Preferably the amount of sulfur is between 0.5 and 7 phr.

Accelerators for sulfur cured systems may be used in amounts from 0.1 to 5 phr more desirably from 0.5 to 2.5 phr. These types of accelerators are well known and include amines, disulfides, guanidines, thioureas, thiols, thiazoles, thiurams, sulfenamides, dithiocarbamates and xanthates. As classes many of these accelerators are either too fast or too slow for curing bladder systems but they may be used in small amounts or specific compounds in each group may be appropriate for use in curing bladders. Blends of two or more accelerators may be used. Preferably the primary accelerator is a sulfenamide. If a secondary accelerator is used, it is preferably a guanidine, dithiocarbamate, or thiuram compound. Primary accelerators are generally used from 0.5 to 2.0 phr and secondary accelerators are generally used from 0.1 to 0.5 phr.

Antioxidants and antiozonants may desirably be added to the curing bladder composition. Antioxidants prevent oxidative crosslinking or oxidative chain scission so that the modulus and fracture properties of the rubber are unchanged during exposure to oxidation especially at elevated temperatures. Antioxidants for rubber compounds in general and for butyl rubber more specifically are well known to the art. Antidegradants include antioxidants and antiozonants. Desirable amounts are from 0.1 to 10 phr and more desirably 2 to 6 phr. Antiozonants are compounds that prevent chain scission due to exposure to ozone. They are also well known to the art. Antidegradants include monophenols, bisphenols, thiophenols, polyphenols, hydroquinone derivatives, phosphites, phosphate blends, thioesters, naphthylamines, diphenol amines as well as other diaryl amine derivatives, para-phenylenes, diamines, quinolines, and blended amines.

Fillers are desirably incorporated into the curing bladder compositions. They may be used in amounts from 0 to 200 phr and more desirably from 30 to 100 phr. A preferred filler is carbon black which is available in various particle sizes and with different surface reactivities from vendors such as Degussa. Reinforcing type fillers are preferred for use in curing bladders. Silica may be used in addition to carbon black. Silicas are generally described as precipitated silicas, fume silicas and various naturally occurring materials having substantial amounts of SiO₂ therein. Fillers include reinforcing fillers such as carbon black which can be used in amounts from 25 to 75 or 85 phr. Typical carbon blacks that can be used include, for example, acetylene black, N110, N121, N220, N231, N234, N242, N293, N299, N326, N330, N332, N339, N343, N347, N351, N358, N375, N472, N539, N550, N683, N754, and N765. Preferably a major portion of the carbon black is acetylene black.

Various oils and waxes may be used in curing bladder formulation depending upon the compatibility of the oils and waxes with the butyl rubber and the other components of the rubber formulation. They may be uniformly dispersed or they may desirably tend to phase separate (migrate to the surface) from the composition. Waxes include microcrystalline wax and paraffin wax. Oils include aliphatic-napthenic aromatic resins, polyethylene glycol, petroleum oils, ester plasticizers, vulcanized vegetable oils, pine tar, phenolic resin, polymeric esters, castor oil and rosins. Oils and waxes can be used in conventional individual amounts from 1 to 5 or up to 10 phr. They are usually considered plasticizers and modulus modifiers. Fatty acids such as stearic acid, palmitic acid and oleic acid may be used in amounts from 0.1 to 5 phr with a range of 0.2 to 1 phr being preferred. Zinc oxide may be present, for example, in amounts from 0.5 to 10 phr.

A procedure for mixing and molding curing bladders in general and for the examples is given below. In a Banbury mixer or the equivalent the rubber polymers, 80 weight percent of the carbon black, the oils, waxes, zinc oxide and optionally particulate fluorinated ethylene polymers were mixed and dispersed until the mix temperature reached 165°C. The material was dumped onto a sheet-off mill and cooled. The cooled material was added to a Banbury mixer or equivalent in the second mixing stage. Then the other 20 weight percent carbon black was added during mixing until the Banbury mix temperature reached 150°C. The material was again dumped onto a sheet-off mill and cooled. In the third mixing stage the curatives (including any neoprene rubber, resin, accelerators, and sulfur) were added and mixed until the mix temperature reached 115°C. The material was then dumped and cooled.

The curing bladder may be molded in an injection molding machine or a transfer molding machine. If transfer molding is selected the material from the Banbury is extruded as a slug. A cure meter is used to determine the approximate time to develop optimal cure at specific temperatures. The actual cure time will depend on heating rate and the gauge (thickness) of the curing bladder. The curing bladder desirably will have a toroidal shape. The curing bladder material tested in the examples was cured for 60 minutes at 171°C.

The curing bladders of this invention are useful for molding and curing various hydrocarbon materials including pneumatic vehicle tires and miscellaneous pneumatic tires for non-vehicle applications. Other hydrocarbon articles cured in bladder equipped presses include hoses, various sleeves, and air springs (a shock absorbing spring for commercial vehicles). The curing bladders have good lubricity, desirable release characteristics from cured hydrocarbon rubbers, extended dynamic flex life, and extended use lifetimes due to their enhanced thermal stability.

Typical properties of a curing bladder as produced are desirably a 300 percent Modulus of 4.0 to 8.0 MPa, a Breaking Strength of 5 to 14 MPa, an Elongation at Break of 400 to 1,000 percent, a Shore A Hardness of 35 to 65, a Hot Tension Set ASTM D412 16 hours at 50 percent elongation and 190°C of 5 to 20 percent, and a Hot Peel Adhesion to a butyl rubber innerliner of 40 to 100 N. More desirably the curing bladder has a 300% Modulus of 4 to 6, a Breaking Strength of 8 to 11 MPa, an Elongation at Break of 600 to 800, a Shore A Hardness of 40 to 50, a Hot Tension Set of 12 to 17%, and a Hot Peel Adhesion of 45 to 90. The properties of a curing bladder after aging 24 hours at 177°C desirably include an Elongation at Break of 300 to 800% more desirably 300 to 500%, a 300% Modulus of 4.5 to 7.5 MPa, a Breaking Strength of 4.5 to 7.5 MPa, a Shore A hardness of 55 to 65, a Hot Tension Set of 13.0 to 18.0% and a Coefficient of Friction with lubrication ASTM D4518 of 0.4 to 1.0.

The following **TABLES I** and **II** show Examples I and II of butyl rubber curing bladders that include fluorinated ethylene polymers. The amounts of materials specified are parts by weight unless otherwise indicated. Example I with its control shows the effect of tetrafluoroethylene, Polymist™ F-5A, on bladder properties. **TABLE II** and Example II thereof show the effect of tetra-fluoroethylene on copolymers of isobutylene and para-methylstyrene.

**TABLE I**

| | **Control** | **Example I** |
|---|---|---|
| | | |
| | | |
| Butyl Rubber * | 95 | 95 |
| Carbon Black | 55 | 55 |
| Processing Oil and Wax | 11.2 | 11.2 |
| Curatives ** | 14 | 14 |
| Neoprene Rubber | 5.0 | 5.0 |
| Tetrafluoroethylene | 0 | 10 |

| **Physical Properties Before Aging** | | |
|---|---|---|
| Break Strength MPA | 9.01 | 8.82 |
| Elongation at Break % | 721 | 608 |
| Hardness 100°C Shore A | 40.5 | 46.8 |
| 95°C Peel Adhesion to halobutyl Innerliner (Newtons) (No Lubricant) | 88 | 49 |

| **Physical Properties After 24 Hours at 177°C in Air** | | |
|---|---|---|
| Coefficient of Friction - No lubricant D4518 (Method B) | 2.24 | 2.24 |
| Coefficient of Friction with lubricant *** D4518 (Method B) | 0.77 | 0.62 |

| | | |
|---|---|---|
| * Mixture of two different copolymers of isobutylene and isoprene having a Mooney ML 1 + 8 @ 125°C of 51 ± 5 and one having slightly less than 1% unsaturation and the other having between 1 and 2% unsaturation. | | |
| ** Curative amounts, exclusive of neoprene rubber, include reactive phenol formaldehyde and zinc oxide in conventional amounts. | | |
| *** Lubricant was a silicone oil emulsified in water with fumed silica. | | |

**TABLE II**

| **First Mix** | **Control** | **Example II** |
|---|---|---|
| Isobutylene-p-methylstyrene copolymer (Exxpro ™) (brominated) | 100 | 100 |
| Carbon Black | 55.0 | 55.0 |
| Processing Oils | 6.0 | 6.0 |
| Processing Aids * | 5.5 | 7.5 |
| Polytetrafluoroethylene | 0.0 | 5.0 |
| Curatives ** | 9.15 | 9.15 |

| **Physical Properties Before Aging** | | |
|---|---|---|
| Break Strength MPa | 9.90 | 9.49 |
| % Elongation at Break | 764 | 780 |
| Shore A Hardness 100°C | 46 | 44 |
| Hot Tension Set 16 hrs. 190°C 50% Elongation (D412) | 17 | 13 (23.5% less tension set) |
| Hot PG Flex ASTM 813 | One of three samples cracked after 60 min. and broke after 180 min. | One of three samples cracked after 180 min. Stopped test at 180 min. (none broke) |
| Lubricity, Coefficient of Friction (no lubricant) D4518 (Method B) | 3.25 | 3.25 |

| **Physical Properties After Aging 24 Hours at 177°C** | | |
|---|---|---|
| Hot PG Flex ASTM 813 | Two of three cracked after 60 min. Others cracked after 120 min. One broke after 240 min. | One of three cracked after 120 min. and broke after 240 min. The other two samples did not crack after 240 min. |
| Hot Tension Set (16 hrs. 190°C 50% Elongation) D412 | 17.5 | 12.5 (28.6% less tension set) |
| Coefficient of Friction (no lubricant) D4518 (Method B) | 2.85 | 2.65 |

| | | |
|---|---|---|
| * Processing aids include wax and fatty acid in conventional amounts. | | |
| ** Curatives include zinc oxide, accelerator, phenol formaldehyde resin and sulfur in conventional amounts. | | |

Example I of **TABLE I** had slightly higher moduli than the control and slightly lower elongation to break. The 95°C Peel Adhesion to innerliner was significantly improved in Example I which would facilitate removing a bladder from a cured tire. The coefficient of friction indicates a lubricant would be necessary. With a lubricant Example I resulted in a lower coefficient of friction which would enhance movement of the bladder during tire forming and curing.

Example II in **TABLE II** using an isobutylene-paramethylstyrene copolymer have similar moduli and elongation to break to its control. Example II had a more desirably hot tension set (lower amount of distortion) than its control. Example II also had better durability in the hot pierced groove flex test (ASTM 813) indicating a longer lifetime for bladders of that formulation. The coefficient of friction after aging for Example II was lower indicating enhanced bladder movement during tire forming and curing.

The tensile tests on the samples are well known to the art and generate the modulus, break strength, and elongation values. The hardness test is D2240 Shore A. The coefficient of friction test is a measure of the friction between a cured bladder composition and an uncured tire innerliner material. It is expressed as a ratio of pulling force divided by the specified load units by test method D4518 Method B. Desirably the value is below 0.7 so the data indicates a lubricant is needed. Lubricity as previously mentioned is necessary for the bladder to slide or move relative to the tire during inflation of the bladder. Without lubricity the bladder surfaces may be bent and folded over itself resulting in undesired bladder shape and misshaped tires.

The Peel Adhesion test measures interfacial adhesion between two different substrates at 95°C which are of different chemical compositions in this disclosure. Interface modifiers are added to the interface of the bladder substrate before the test is made. These are an emulsifiable silicone oil dispersed in water and thickened with a fumed silica. A Mylar™ (polyester) sheet having laterally placed windows cut therein (5 mm wide by 100 mm longer) is placed between the bladder material and an uncured tire innerliner material which is the other substrate. The window in the Mylar™ sheet creates a known area of interfacial adhesion between the bladder sample and the tire innerliner sample. A fabric backing is applied to bladder material and the butyl innerliner and is secured with adhesive and/or stitching. The assembled sample of the two substrates with their fabric backing is cured in a diaphragm curing mold for 28 minutes at 150°C with 100 psi pressure (0.69 MPa) in the diaphragm. After this process the assembled sample is cut in 1" (2.54 cm) wide strips with the window portion of the Mylar longitudinal and centered therein, the two substrate materials are separated slightly by hand operation. They are then mounted in an Instron™ type force displacement tester in a configuration such that the peel angle between the separated substrates is 180°. The force displacement tester separates the substrates at a rate of 51 mm/min and records the force used. The average force used over the adhered area divided by the sample width is recorded as the adhesion value.

The hot pierced groove (PG) flex test ASTM 813 measures the resistance to cracking of the bladder when initiated by a puncture and encouraged or facilitated by the presence of a groove. This is a dynamic test and, therefore, is used as an estimate of how a roughened or abraded bladder will resist cracking and failure.

The curing bladders described herein are useful in bladder or diaphragm type curing presses to cure hydrocarbon rubber compositions and preferably pneumatic tires. These presses desirably have one or more molding surfaces besides the diaphragm or bladder. The uncured hydrocarbon composition is placed in the mold, the mold is closed, and the bladder or diaphragm is inflated (expanded usually with a heated gas such as steam). This sandwiches the uncured composition between the bladder or diaphragm and the one or more other mold surfaces. The hydrocarbon rubber typically flows and conforms to the texture and shape of the one or more other mold surfaces which are often a metal or alloy thereof and rather rigidly fixed during the molding operation. Further heating of the uncured composition causes it cure (also called vulcanization or crosslinking) which solidifies the final shape of the article conforming to the one or more rigid mold surfaces. The bladder or diaphragm is then deflated (removing the internal pressure) to facilitate removal of the molded parts. Depending on the shape of the article, one or more of the other molding surfaces may physically move to open the mold further facilitating part removal.

## Claims

1. An expandable curing bladder **characterized by** comprising:
a) one or more isobutylene polymers or copolymers having at least 50 weight percent isobutylene units and optionally one or more other rubbery polymers,
b) 0.5 to 30 parts by weight of one or more particulate fluorinated ethylene polymers having a number average particle diameter of from 1 to 25µm dispersed throughout the bladder, and
c) one or more curatives for said one or more isobutylene polymers or copolymers and
wherein said parts by weight are based upon 100 parts by weight of said one or more isobutylene polymers or copolymers and said optional rubbery polymers in said bladder.

2. An expandable curing bladder according to claim 1, **characterized in that** said one or more isobutylene polymers or copolymers are one or more copolymers comprised of 80 to 99 weight percent isobutylene and 1 to 20 weight percent para-methylstyrene and are present as at least 50 weight percent of the rubbers of the bladder formulation.

3. An expandable curing bladder according to claim 1, **characterized in that** said one or more isobutylene polymers or copolymers comprises copolymers of from 95 to 99 weight percent isobutylene and from 1 to 5 weight percent of one or more conjugated dienes and wherein said one or more particulate fluorinated ethylene polymers have one or more fluorine atoms in at least 75% of their repeat units and said copolymers of isobutylene and conjugated dienes are at least 50 weight percent of the rubbers of said bladder formulation.

4. An expandable curing bladder according to claim 2, **characterized in that** said one or more particulate fluorinated ethylene polymers have at least 75% repeat units having one or more fluorine atoms, and wherein said one or more copolymers comprised of isobutylene and para-methylstyrene are brominated and are at least 95 weight percent of the rubbers of the bladder formulation.

5. An expandable curing bladder according to claim 4, **characterized in that** said one or more fluorinated ethylene polymers consists essentially of tetrafluoroethylene repeat units.

## Patentansprüche

1. Ausdehnbarer Vulkanisationsheizbalg, **dadurch gekennzeichnet, dass** er umfasst:
a) ein oder mehrere Isobutylen-Polymere oder -Copolymere mit mindestens 50 Gew.-% Isobutylen-Einheiten und gegebenenfalls ein oder mehrere andere kautschukartige Polymere,
b) 0,5 bis 30 Gew.-Teile eines oder mehrerer teilchenförmiger, fluorierter Ethylen-Polymere mit einem zahlengemittelten Teilchendurchmesser von 1 bis 25 µm, die im Heizbalg dispergiert sind, und
c) ein oder mehrere Vulkanisationsmittel für das eine oder die mehreren Isobutylen-Polymere oder -Copolymere und
wobei die Gew.-Teile auf 100 Gew.-Teile des einen oder der mehreren Isobutylen-Polymere oder -Copolymere und der optionalen kautschukartigen Polymere im Heizbalg bezogen sind.

2. Ausdehnbarer Vulkanisationsheizbalg nach Anspruch 1, **dadurch gekennzeichnet, dass** das eine oder die mehreren Isobutylen-Polymere oder -Copolymere ein oder mehrere Copolymere sind, die 80 bis 99 Gew.-% Isobutylen und 1 bis 20 Gew.-% para-Methylstyrol umfassen und als mindestens 50 Gew.-% der Kautschuke der Heizbalgformulierung vorliegen.

3. Ausdehnbarer Vulkanisationsheizbalg nach Anspruch 1, **dadurch gekennzeichnet, dass** das eine oder die mehreren Isobutylen-Polymere oder ―Copolymere Copolymere von 95 bis 99 Gew.-% Isobutylen und 1 bis 5 Gew.-% eines oder mehrerer konjugierter Diene umfassen und worin das eine oder die mehreren teilchenförmigen, fluorierten Ethylen-Polymere ein oder mehrere Fluoratome in mindestens 75% ihrer Struktureinheiten aufweisen und die Copolymere von Isobutylen und konjugierten Dienen mindestens 50 Gew.-% der Kautschuke der Heizbalgformulierung ausmachen.

4. Ausdehnbarer Vulkanisationsheizbalg nach Anspruch 2, **dadurch gekennzeichnet, dass** das eine oder die mehreren teilchenförmigen, fluorierten Ethylen-Polymere mindestens 75% Struktureinheiten mit einem oder mehreren Fluoratomen aufweisen und worin das eine oder die mehreren Copolymere, die Isobutylen und para-Methylstyrol umfassen, bromiert sind und mindestens 95 Gew.-% der Kautschuke der Heizbalgformulierung ausmachen.

5. Ausdehnbarer Vulkanisationsheizbalg nach Anspruch 4, **dadurch gekennzeichnet, dass** das eine oder die mehreren fluorierten Ethylen-Polymere im wesentlichen aus Tetrafluorethylen-Struktureinheiten bestehen.

## Revendications

1. Vessie de vulcanisation apte à s'élargir **caractérisée en ce qu'**elle comprend :
a) un ou plusieurs polymères ou copolymères d'isobutylène contenant des unités d'isobutylène à concurrence d'au moins 50 % en poids et le cas échéant un ou plusieurs autres polymères caoutchouteux ;
b) un ou plusieurs polymères d'éthylène fluoré particulaire à concurrence de 0,5 à 30 parties en poids, possédant un diamètre de particules moyen en nombre de 1 à 25 µm, dispersés à travers la vessie, et
c) un ou plusieurs adjuvants de vulcanisation pour lesdits un ou plusieurs polymères ou copolymères d'isobutylène, et
dans laquelle, lesdites parties en poids se basent sur 100 parties en poids desdits un ou plusieurs polymères ou copolymères d'isobutylène et desdits polymères caoutchouteux facultatifs dans ladite vessie.

2. Vessie de vulcanisation apte à s'élargir selon la revendication 1, **caractérisée en ce que** lesdits un ou plusieurs polymères ou copolymères d'isobutylène représentent un ou plusieurs copolymères comprenant de l'isobutylène à concurrence de 80 à 99 % en poids et du para-méthylstyrène à concurrence de 1 à 20 % en poids, lesdits un ou plusieurs copolymères représentant au moins 50 % en poids des caoutchoucs de la formulation de la vessie.

3. Vessie de vulcanisation apte à s'élargir selon la revendication 1, **caractérisée en ce que** lesdits un ou plusieurs polymères ou copolymères d'isobutylène comprennent des copolymères d'isobutylène à concurrence de 95 à 99 % en poids et d'un ou de plusieurs diènes conjugués à concurrence de 1 à 5 % en poids, et dans laquelle lesdits un ou plusieurs polymères d'éthylène fluoré particulaire possèdent un ou plusieurs atomes de fluor dans au moins 75 % de leurs unités de structure et lesdits copolymères d'isobutylène et de diènes conjugués représentent au moins 50 % en poids des caoutchoucs de ladite formulation de vessie.

4. Vessie de vulcanisation apte à s'élargir selon la revendication 2, **caractérisée en ce que** lesdits un ou plusieurs copolymères d'éthylène fluoré particulaire possèdent, à concurrence d'au moins 75 %, des unités de structures possédant un ou plusieurs atomes de fluor, et dans laquelle lesdits un ou plusieurs copolymères comprenant de l'isobutylène et du para-méthylstyrène sont des copolymères bromés et représentent au moins 95 % des caoutchoucs de la formulation de vessie.

5. Vessie de vulcanisation apte à s'élargir selon la revendication 4, **caractérisée en ce que** lesdits un ou plusieurs polymères d'éthylène fluoré sont constitués essentiellement par des unités de structures à base de tétrafluoréthylène.
